# DEMANDE DE BREVET EUROPEEN

(11) **EP 2 369 466 A1**
(43) Date de publication de la demande: **28.09.2011**
(21) Numéro de dépôt: 11158776.2
(22) Date de dépôt: 18.03.2011
(51) Int. Cl.: G06F 3/12, G06F 21/00

(54) **Imprimante maître pour un système d'impression sur une imprimante disponible au travers d'un réseau de communication**

(30) Priorité: 22.03.2010 FR 1052028
(71) Demandeur: Sagemcom Documents SAS, 92500 Rueil Malmaison (FR)
(72) Inventeur: Sartori, David, 92500, RUEIL MALMAISON (FR)
(74) Mandataire: Maillet, Alain

(57) **Abrégé**

Le système d'impression comprend au moins un poste client et une imprimante. Dans ce système, une imprimante parmi celles disponibles sur le réseau et comportant les ressources nécessaires joue un rôle privilégié d'imprimante maître. Les postes clients envoient les requêtes d'impression avantageusement protégées par un code vers cette imprimante maître. L'utilisateur se déplace alors vers l'imprimante de son choix et déclenche l'impression en attente sur l'imprimante maître sur ladite imprimante de son choix.

## Description

La présente invention concerne le domaine des systèmes d'impression sur une imprimante disponible au travers d'un réseau de communication depuis un dispositif de traitement de l'information connecté audit réseau et plus particulièrement l'imprimante maître chargée de gérer la file d'impression.

Aujourd'hui, l'impression réseau implique l'utilisation de trois types de protocoles standardisés. Un premier type connu sous le nom RAW consiste à envoyer directement les données images par une connexion TCP/IP (*Transmission Control Protocol* / *Internet Protocol* en anglais défini par les RFC 791 et 793). Un second type connu sous le nom LPD (*Line Printer Daemon* en anglais) défini dans la RFC 1179, qui définit un protocole plus élaboré des travaux d'impression. Un troisième protocole connu sous le nom IPP (*Internet Printing Protocol* en anglais), défini par la RFC 2911 définit un protocole élaboré de travaux et de paramètres.

Tous ces protocoles, sauf parfois IPP, sont implémentés dans toutes les imprimantes réseau récentes du marché. Généralement, la partie serveur est implémentée dans l'imprimante et la partie cliente dans un programme propriétaire couramment compilé pour Windows, parfois Linux et MAC (grâce au système CUPS). Ce programme appelé pilote d'imprimante prend en entrée des documents déjà formatés par des logiciels bureautiques et les transmet dans une file d'impression (*spooler* en anglais). La file d'impression, notamment celle partagée par un serveur d'impression Windows, voit tous les documents en attente d'impression, y compris les documents émis depuis d'autres ordinateurs. Se pose alors le problème de la confidentialité des documents imprimés, puisque le temps de se rendre de son PC à l'imprimante, généralement partagée sur un plateau de bureaux, le document aura pu être subtilisé.

Des systèmes propriétaires sont implémentés par les constructeurs pour empêcher l'impression dans la foulée. Dans ces systèmes, typiquement, l'utilisateur doit entrer un code pour débloquer le document situé dans la file d'impression. Pour bénéficier de cette fonctionnalité, il faut obligatoirement installer un pilote d'impression particulier gérant cette fonctionnalité. Cette tâche est rendue plus aisée à l'administrateur réseau grâce aux serveurs d'impression Windows, qui partagent une imprimante donnée grâce à son nom NETBIOS.

Mais il reste encore à l'utilisateur à deviner le nom de l'imprimante vers laquelle imprimer. Ces noms ne sont pas toujours explicites ce qui entraîne un risque de se tromper d'imprimante augmentant d'autant les risques de subtilisation de documents imprimés.

Généralement les utilisateurs sont obligés de se déplacer pour aller chercher leurs documents dans l'imprimante. C'est donc au dernier moment, quand l'utilisateur se trouve devant le pupitre de l'imprimante voulue, que l'ordre d'imprimer est donné en utilisant le code entré lors de la demande d'impression sur le poste client. On évite ainsi que le document puisse être imprimé en dehors du contrôle de l'utilisateur ayant demandé l'impression.

Mais il faut savoir que la fonction d'impression sécurisée par code actuellement disponible en série ne fonctionne que grâce à la temporisation locale du document sur l'imprimante. Ce qui implique que l'imprimante cible doit disposer d'une mémoire de masse importante, typiquement de plusieurs dizaines de Mo. Parfois, un disque dur est ajouté à cet effet, ce qui conduit à des configurations plus coûteuses. Cette fonction n'est donc accessible que sur des imprimantes haut de gamme.

L'invention vise à résoudre les problèmes précédents par une imprimante maître gérant la file d'impression dans un système d'impression comprenant au moins un poste client et une imprimante. Dans ce système, une imprimante parmi celles disponibles sur le réseau et comportant les ressources nécessaires joue un rôle privilégié de ladite imprimante maître. Les postes clients envoient les requêtes d'impression avantageusement protégées par un code vers cette imprimante maître. L'utilisateur se déplace alors vers l'imprimante de son choix et déclenche l'impression en attente sur l'imprimante maître sur ladite imprimante de son choix.

De cette façon, l'utilisateur n'est plus obligé de choisir au moment du lancement de l'impression l'imprimante de destination. Le procédé de protection par code est utilisable depuis toute imprimante compatible disponible sur le réseau, seule l'imprimante maître devant posséder les ressources nécessaires à la gestion de la file d'attente.

L'invention concerne une imprimante maître pour un système d'impression au sein d'un réseau de communication comportant au moins un poste client et au moins une imprimante connectés au réseau, au moins une imprimante connectée au réseau disposant de capacités de stockage, une imprimante unique parmi celles qui disposent de capacités de stockage est désignée comme imprimante maître, qui comporte :
- des moyens de gestion d'une file d'impression comportant des documents à imprimer dans un format générique non spécifique d'un type d'imprimante particulier ;
- des moyens pour créer un travail d'impression associant au moins le fichier au format générique créé et un code de déblocage sur requête d'un poste client ;
- des moyens pour envoyer la liste des travaux en attente associés à un code de déblocage entré par un utilisateur sur requête d'une imprimante ;
- des moyens pour fournir un travail sélectionné dans ladite liste envoyée sur requête d'une imprimante.

Selon un mode particulier de réalisation de l'invention, ces moyens sont implémentés sous la forme d'un service UPnP sur ladite imprimante.

Selon un mode particulier de réalisation de l'invention, elle comporte en outre des moyens de fournir son adresse aux postes clients et aux autres imprimantes lors d'une phase de découverte SSDP.

Selon un mode particulier de réalisation de l'invention, le service UPnP implémenté sur ladite imprimante dispose d'une action permettant d'être interrogée sur son statut d'imprimante maître.

Selon un mode particulier de réalisation de l'invention, elle comporte en outre des moyens de recevoir ledit fichier générique depuis le poste client réalisés sous la forme d'une requête HTTP.

Selon un mode particulier de réalisation de l'invention, elle comporte en outre des moyens d'envoyer le travail d'impression vers l'imprimante finale réalisés sous la forme d'une requête HTTP.

Selon un mode particulier de réalisation de l'invention, elle comporte en outre des moyens de suppression du travail de la file d'attente sur requête d'une imprimante.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre un exemple de réseau comportant un système d'impression selon l'invention,
La Fig. 2 illustre le fonctionnement du poste client dans un exemple de réalisation de l'invention,
La Fig. 3 illustre les échanges complets entre les différents acteurs selon un exemple de réalisation de l'invention,
La Fig. 4 décrit le processus d'impression sur l'imprimante destinataire selon un exemple de réalisation de l'invention.

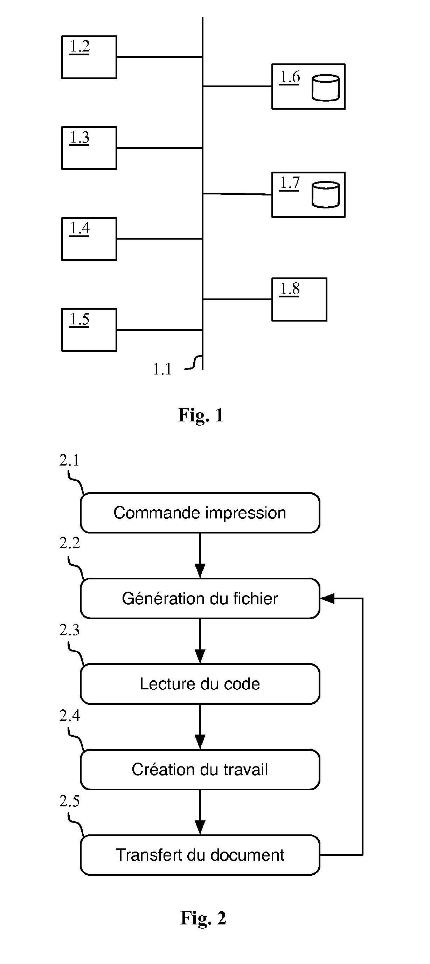

La Fig. 1 illustre un exemple de réseau comportant un système d'impression selon l'invention. Les différents appareils communiquent à l'aide d'un réseau de communication 1.1, typiquement le réseau local d'une entreprise. Ce réseau peut fonctionner selon tout type de technologie filaire, par exemple Ethernet, ou sans fil, par exemple WiFi. Connectés à ce réseau se trouvent des postes clients, 1.2 à 1.5, susceptibles de lancer des commandes d'impression de documents. Ces postes clients sont typiquement des postes informatiques, ordinateurs de bureau, ordinateurs portables ou encore tout dispositif de traitement de l'information disposant de capacités de communication réseau. On peut citer, par exemple, des assistants personnels, des téléphones mobiles ou encore des appareils photo pouvant imprimer les photos par WiFi. Des imprimantes, 1.6 à 1.8, sont également connectées à ce réseau. Ces imprimantes peuvent recevoir des commandes d'impression et imprimer les documents correspondants. Certaines de ces imprimantes peuvent être dotées de capacités de stockage local, les imprimantes 1.6 et 1.7 représentées avec un disque, tandis que d'autres imprimantes, l'imprimante 1.8, en sont dépourvues. Les imprimantes qui disposent de capacités de stockage local peuvent implémenter un système de file d'attente local. Dans ce système, les ordres d'impression ainsi que les fichiers à imprimer sont alors stockés à l'aide des capacités de stockage local et imprimés typiquement dans l'ordre de leur réception par l'imprimante.

Lorsqu'un utilisateur d'un poste client souhaite imprimer un document, se déroulent typiquement les opérations suivantes :
- l'utilisateur déclenche une impression ;
- une liste d'imprimantes disponibles, c'est-à-dire dont les pilotes sont installés sur le poste, lui est alors présentée ;
- il sélectionne l'imprimante désirée, généralement identifiée par un nom pas toujours explicite ;
- le logiciel de gestion du document prépare alors une version de celui-ci standardisée pour l'impression ;
- cette version est transmise au pilote d'impression local qui le transforme au format voulu pour l'imprimante sélectionnée ;
- le pilote se connecte alors à la file d'attente associée à l'imprimante ;
- il transfère ce fichier dans la file d'attente, généralement associé à des paramètres d'impression tels que la mise en page ou autre, ce fichier à imprimer associé aux paramètres d'impression est généralement appelé travail dans le jargon, on dit qu'un travail d'impression est en attente dans la file d'attente ;
- l'imprimante surveille sa file d'attente et dès qu'elle est disponible elle lance le premier travail en attente dans sa file d'attente.

La file d'attente associée à une imprimante peut être localisée à plusieurs endroits. Typiquement, lorsqu'une imprimante est directement connectée à un poste client, la file d'attente est gérée par le pilote d'impression sur le poste client. Dans le cas d'une impression en réseau, il est courant que la file d'attente associée à une imprimante soit gérée sur l'imprimante de destination. Dans ce cas le pilote d'imprimante sur le poste client envoie le travail d'impression à la file d'attente sur le serveur. L'imprimante surveille cette file d'attente sur le serveur et reçoit chaque travail au fur et à mesure du processus d'impression.

Lorsque l'imprimante possède des capacités de stockage local, il est possible d'avoir la file d'attente d'impression directement gérée par l'imprimante sur ses capacités de stockage local. Cette façon de faire est un peu plus sécurisée dans la mesure où les capacités de stockage local d'une imprimante sont normalement moins accessibles sur le réseau qu'une file d'impression gérée par un serveur.

Pour éviter qu'un document ainsi imprimé puisse être subtilisé avant que l'utilisateur à l'origine de l'impression ait eu le temps de se déplacer physiquement vers l'imprimante concernée, il est connu de sécuriser l'impression à l'aide d'un code. L'utilisateur entre alors un code lorsqu'il déclenche l'impression. Ce code est associé au travail d'impression dans la file d'attente. L'imprimante retarde alors l'impression d'un tel travail protégé par un code jusqu'au moment où l'utilisateur entre ce même code sur le pupitre de l'imprimante. Le travail est alors déclenché sous la surveillance de l'utilisateur. Ce procédé est réservé aux imprimantes dotées de capacités de stockage et gérant elles-mêmes leur file d'attente. Il n'est donc pas disponible pour une imprimante sans capacités de stockage.

Le système d'impression selon l'invention prend place dans un réseau comportant au moins un poste client à l'origine des requêtes d'impression et au moins une imprimante comportant des capacités de stockage. Sur ce réseau, nous disposons d'un ensemble d'imprimantes dotées de capacités de stockage, ensemble non vide, et d'un ensemble, potentiellement vide, d'imprimantes sans capacités de stockage. Dans l'ensemble des imprimantes dotées de capacités de stockage, une imprimante unique est désignée comme maître. Le procédé de désignation peut être manuel par configuration ou encore consister en un processus d'élection lancé automatiquement lors d'une évolution, déconnexion / connexion, de l'ensemble des imprimantes connectées au réseau. Cette imprimante maître est chargée de la gestion de la file d'attente du système d'impression. À tout moment, tous les acteurs du système, postes clients et imprimantes, connaissent l'adresse de cette imprimante maître sur le réseau. Cette connaissance peut être acquise par divers moyens. Il peut, ici encore, s'agir d'une configuration manuelle de chaque poste. Avantageusement, elle est acquise par un processus de découverte sur le réseau local. Plusieurs solutions sont ici envisageables, l'adresse peut être communiquée aux acteurs lors de leur mise sous tension par un protocole d'attribution de paramètres réseau tel que DHCP (*Dynamic Host Control Protocol* en anglais). L'exemple de réalisation de l'invention est basé sur UPnP (*Universal Plug and Play* en anglais) promulgué par l'UPnP forum. Ce système comporte un système de découverte des services disponibles sur le réseau utilisant SSDP (*Simple Service Discovery Protocol* en anglais) qui permet de découvrir les services disponibles sur un réseau. Dans cet exemple de réalisation, l'invention utilise un service particulier, le service *FollowMe,* développé comme service d'impression optionnel UPnP. Les imprimantes annoncent le support du service *FollowMe* aux acteurs du réseau par SSDP. Une action spécifique du service UPnP *FollowMe* permet alors aux acteurs d'interroger le service sur le statut de maître de l'imprimante.

Du fait de la connaissance par le poste client de l'adresse de l'imprimante maître sur le réseau, la commande d'impression lancée par l'utilisateur ne nécessite plus la désignation d'une imprimante spécifique par l'utilisateur. En revanche, habituellement, la file d'attente d'impression d'une imprimante contient des travaux d'impression où le fichier à imprimer est dans un format spécifique de l'imprimante. Ce format est préparé par le pilote associé à ladite imprimante sur le poste client. Dans le cadre de l'invention, on ne détermine l'imprimante finale qu'au dernier moment. Sauf à limiter l'invention à des imprimantes d'un seul type, il faut donc définir un format générique de fichier pour les travaux d'impression stockés dans la file d'attente. Ce format est générique dans le sens qu'il n'est pas spécifique d'un type d'imprimante particulier et est susceptible d'être imprimé par toutes les imprimantes du réseau. Ce format est alors converti par le service sur l'imprimante de destination. Dans l'exemple de réalisation de l'invention, le format choisi est le PDF (*Portable Document Format* en anglais) développé par la société Adobe et adopté aujourd'hui comme standard.

Les travaux dans la file d'impression gérée par l'imprimante maître sont donc indépendants de l'imprimante finale qui sera utilisée pour l'impression. Ils comportent un fichier générique, typiquement PDF, et un code associé permettant de débloquer l'impression.

L'utilisateur peut utiliser une imprimante quelconque connectée sur le réseau. Cette imprimante, tout comme le poste client, est un acteur du réseau et profite des mêmes mécanismes pour connaître l'adresse de l'imprimante maître. Elle peut donc interroger celle-ci pour récupérer le ou les travaux associés à un code entré par l'utilisateur sur l'imprimante et imprimer un travail à la demande.

La Fig. 2 illustre le fonctionnement du poste client pour effectuer une impression. Lors d'une première étape 2.1, l'utilisateur demande une impression sur le poste client. Le fichier générique est créé depuis le logiciel de gestion du document lors de l'étape 2.2. Dans l'exemple de réalisation, on utilise un pilote d'impression générant un fichier PDF. Cette fonction existe dans le système Mac OS, sur un poste client Windows ou Linux, il est possible d'utiliser des logiciels dédiés à cette tâche. L'utilisateur entre alors le code permettant de sécuriser la tâche d'impression lors de l'étape 2.3. Avantageusement, le fichier est associé à des paramètres d'impression tels que la mise en page, l'échelle, l'utilisation de la couleur ou autres. Le poste client dispose alors de toutes les informations nécessaires pour créer le travail d'impression sur l'imprimante maître, c'est l'étape 2.4. Selon l'exemple de réalisation, le poste client dispose d'une version client du service *FollowMe.* Ce service client implémente un serveur HTTP (*Hyper Text Transfer Protocol* en anglais). Le fichier associé au code et aux éventuels paramètres d'impression est alors mis à disposition sur ce serveur HTTP local au poste client et géré par le service client. Une action de création de travail est envoyée à l'imprimante maître, dont on connaît l'adresse. Cette action prend en paramètre l'URI (*Universal Resource Identifier* en anglais) du fichier mis à disposition. Le fichier est alors transféré, c'est l'étape 2.5, du poste client dans la file d'attente gérée par l'imprimante maître. Dans l'exemple de réalisation, c'est le service *FollowMe* de l'imprimante qui requiert le fichier à l'aide du protocole HTTP et de l'URI transmise lors de l'action de création de travail. Alternativement, le client pourrait pousser le fichier sur l'imprimante maître à l'aide d'une commande HTTP de type *push.* Tout protocole permettant le transfert d'un fichier entre les machines peut également être utilisé en alternative, par exemple FTP (*File Transfer Protocol* en anglais). Si l'utilisateur a demandé l'impression de plusieurs documents, on reboucle à l'étape 2.2 pour générer le fichier suivant.

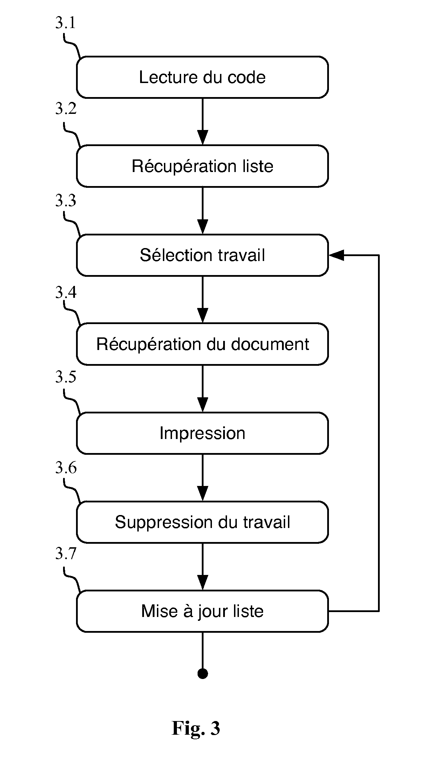

Une fois le travail d'impression en attente sur l'imprimante maître, l'utilisateur se dirige vers l'imprimante de son choix. La Fig. 3 décrit le processus d'impression sur l'imprimante destinataire. Lors de l'étape 3.1, l'utilisateur entre son code sur le panneau de contrôle de l'imprimante. Cette imprimante, qui connaît l'imprimante maître, lui envoie une requête avec le code. Elle reçoit en retour, étape 3.2, la liste des travaux associés à ce code en attente sur l'imprimante maître. Selon l'exemple de réalisation de l'invention, ces échanges sont implémentés sous la forme d'action du service UPnP *FollowMe* déclenchés par le protocole de procédure à distance SOAP (*Simple Object Access Protocol* en anglais). La liste des travaux associés au code de l'utilisateur est alors affichée sur le pupitre de l'imprimante pour permettre à l'utilisateur une sélection des travaux qu'il souhaite lancer. L'utilisateur sélectionne alors le travail à lancer, étape 3.3. L'imprimante requiert alors auprès de l'imprimante maître le travail à lancer, étape 3.4. Dans l'exemple de réalisation, cet échange prend la forme d'une requête HTTP du fichier à imprimer, l'URI correspondante ayant été fournie pour chaque travail dans la liste des travaux disponibles. L'imprimante peut alors lancer l'impression effective du document, étape 3.5. Avantageusement, elle requiert également la suppression du travail auprès de l'imprimante maître sous la forme d'une action du service UPnP *FollowMe,* étape 3.6. La liste des travaux associés au code préalablement entré est alors mise à jour lors de l'étape 3.7 pour que l'utilisateur puisse éventuellement lancer une nouvelle impression d'un autre travail en attente, étape 3.3. Lorsque l'utilisateur a fini ses impressions, il stoppe le processus.

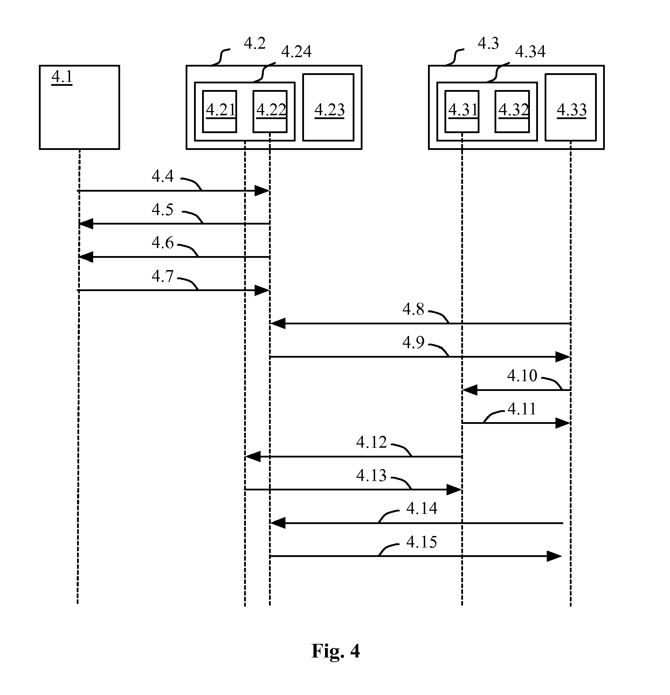

La Fig. 4 illustre tous les échanges entre les différents acteurs impliqués dans une impression selon l'exemple de réalisation de l'invention. Ces acteurs comprennent le point de contrôle utilisateur 4.1 sur le poste client. Sur l'imprimante maître on trouve le gestionnaire d'imprimante 4.2 qui comprend le point de contrôle de l'imprimante 4.23, le service UPnP d'impression amélioré *PrintEnhanced:1* 4.21 et le service UPnP *FollowMe* 4.22. Ces deux derniers constituant le gestionnaire de périphérique imprimante 4.24. On retrouve la même structure sur l'imprimante de destination avec les éléments 4.3, 4.31, 4.32, 4.33 et 4.34.

Lors du déclenchement de l'impression, le point de contrôle utilisateur 4.1 envoie une action SOAP 4.4 de création de travail au service *FollowMe* de l'imprimante maître contenant l'URI du fichier à imprimer et le code associé. Il reçoit un accusé de réception 4.5 sous la forme d'une réponse SOAP ok. Il reçoit ensuite une requête 4.6 pour le fichier à imprimer sous la forme d'une commande GET HTTP URI. Le fichier est alors envoyé sous la forme d'une réponse 4.7 HTTP.

L'utilisateur se rend alors auprès de l'imprimante de destination et entre son code. Le point de contrôle de l'imprimante 4.33 envoie alors une requête 4.8 au service *FollowMe* de l'imprimante maître 4.22 pour demander la liste des travaux associés au code sous la forme d'une action SOAP contenant le code. La liste est transmise par une réponse SOAP 4.9.

Le point de contrôle d'imprimante 4.33 demande alors l'impression du travail sélectionné au service d'impression 4.31 sous la forme d'une action SOAP 4.10 de création d'un travail d'impression contenant l'URI du fichier sur l'imprimante maître. Il reçoit un accusé de réception 4.11 sous la forme d'une réponse SOAP ok.

Pour effectuer son impression, le gestionnaire d'impression 4.31 envoie une requête d'impression au gestionnaire de périphérique d'imprimante 4.24 sous la forme d'une requête 4.12 GET HTTP avec l'URI transmise. Il reçoit le fichier sous la forme d'une réponse 4.13 HTTP et effectue l'impression.

Celle-ci effectuée, le point de contrôle d'imprimante 4.33 demande la suppression du travail dans la file d'impression de l'imprimante maître sous la forme d'une action SOAP 4.14. En réponse, il reçoit une liste mise à jour des travaux en attente associés au code sous la forme d'une réponse SOAP 4.15.

Nous avons vu que les travaux d'impression sont basés sur l'utilisation d'un format de fichier générique, le PDF dans l'exemple de réalisation. Pour permettre l'impression des fichiers PDF récupérés auprès de l'imprimante maître, toutes les imprimantes contiennent en outre du service UPnP *FollowMe,* un pilote d'impression constitué d'un client UPnP *FollowMe*, qui remplit la fonction de la transformation du format générique dans le format de chaque imprimante telle qu'elle est faite sur le poste client dans l'art antérieur.

Ce système d'impression permet d'implémenter un service d'impression protégé par code sur un parc d'imprimantes hétérogène, toutes n'étant pas nécessairement dotées de capacités de stockage. En outre, il libère l'utilisateur du choix, sujet à erreur, de l'imprimante de destination lors du lancement de l'opération d'impression sur le poste client. Il apporte la souplesse d'un choix de l'imprimante de destination qui peut être librement fait au dernier moment par l'utilisateur.

## Revendications

1. Imprimante (1.6) destinée à être connectée à un réseau de communication (1.1) comportant au moins un poste client (1.2;1.3) et une pluralité d'imprimantes (1.7;1.8), l'imprimante revendiquée disposant de capacités de stockage et comportant :
- des moyens de gestion d'une file d'impression destinée à stocker des fichiers correspondant à des documents à imprimer ;
- des moyens pour envoyer, sur requête d'une imprimante requérante, une liste de travaux d'impression en attente ;
- des moyens pour fournir un travail sélectionné dans ladite liste envoyée sur requête de l'imprimante requérante,
**caractérisée en ce qu'**elle comporte en outre :
- des moyens pour recevoir des fichiers dans un format générique en provenance du ou des postes clients et pour stocker les fichiers reçus dans ladite file d'impression, le format étant générique **en ce qu'**il est non spécifique d'un type d'imprimante particulier ;
- des moyens pour créer un travail d'impression associant au moins chaque fichier reçu et un code de déblocage permettant de sécuriser le travail d'impression ;
et **en ce que** les moyens pour envoyer la liste des travaux en attente sont adaptés pour envoyer la liste des travaux en attente associés à un code de déblocage fourni par l'imprimante requérante.

2. Imprimante selon la revendication 1, **caractérisée en ce que** ces moyens sont implémentés sous la forme d'un service UPnP sur ladite imprimante.

3. Imprimante selon la revendication 2, **caractérisée en ce qu'**elle comporte en outre des moyens pour fournir son adresse à chaque poste client et à chaque autre imprimante du réseau lors d'une phase de découverte selon le protocole SSDP.

4. Imprimante selon la revendication 2, **caractérisée en ce que** ledit service UPnP dispose d'une action permettant à ladite imprimante d'être interrogée et de répondre sur son statut d'imprimante maître, ledit statut d'imprimante maître étant acquis lorsque ladite imprimante est désignée pour mettre en oeuvre lesdits moyens pour recevoir des fichiers, lesdits moyens pour créer un travail d'impression et lesdits moyens pour envoyer la liste des travaux en attente.

5. Imprimante selon l'une des revendications 1 à 4, **caractérisée en ce que** les moyens pour recevoir chaque fichier au format générique depuis un poste client sont réalisés sous la forme d'une requête HTTP.

6. Imprimante selon l'une des revendications 1 à 5, **caractérisée en ce qu'**elle comporte en outre des moyens pour envoyer le travail d'impression vers ladite imprimante requérante réalisés sous la forme d'une requête HTTP.

7. Imprimante selon l'une des revendications 1 à 6, **caractérisée en ce qu'**elle comporte en outre des moyens de suppression du travail de la file d'attente sur requête de ladite imprimante requérante.
